# EUROPEAN PATENT APPLICATION

(11) **EP 3 667 771 A1**
(43) Date of publication of application: **17.06.2020**
(21) Application number: 18862603.0
(22) Date of filing: 28.09.2018
(51) Int. Cl.: H01M 4/02, H01G 11/28, H01M 4/66, H01M 4/13, H01M 4/131

(54) **ELECTRODE AND POWER STORAGE ELEMENT**

(30) Priority: 29.09.2017 JP 2017190069
(71) Applicant: GS Yuasa International Ltd., Kyoto-shi, Kyoto 601-8520 (JP); Robert Bosch GmbH, 70442 Stuttgart (DE)
(72) Inventor: TSUJITA Kohei, Kyoto-shi Kyoto 601-8520 (JP); OHSUGI Yuta, Kyoto-shi Kyoto 601-8520 (JP); TANABE Morito, Kyoto-shi Kyoto 601-8520 (JP); MUKAI Hiroshi, Kyoto-shi Kyoto 601-8520 (JP); WATARU Yukihiro, Kyoto-shi Kyoto 601-8520 (JP)
(74) Representative: Isarpatent
(86) International application number: PCT/JP2018/036271
(87) International publication number: WO 2019/065972

(57) **Abstract**

One embodiment of the present invention is an electrode for an energy storage device including a conductive substrate, an intermediate layer, and an active material layer in this order. In the electrode, the intermediate layer includes a conductive agent, a compound decomposed at 100°C or higher to generate a gas, and a binder, and the content of the compound with respect to the content of the conductive agent in the intermediate layer is 2 times or more and 20 times or less by mass ratio.

## Description

### TECHNICAL FIELD

The present invention relates to an electrode and an energy storage device.

### BACKGROUND ART

Secondary batteries typified by lithium ion secondary batteries are widely used for electronic devices such as personal computers and communication terminals, automobiles and the like because these secondary batteries have a high energy density. In such energy storage devices such as secondary batteries and capacitors, abnormalities such as heat generation and ignition may occur due to, for example, use not usually foreseen. For example, a short circuit may occur between electrodes due to an impact such as a drop or a foreign substance mixed during manufacturing, and as a result, heat may be generated. A separator may be melted due to heat generation for some reason, and a short circuit may occur.

In view of such circumstances, in order to improve safety, an electrode having a function of interrupting a current with a rise in temperature, and an energy storage device including such an electrode have been developed. As the electrode having the above function, there have been known an electrode including an active material layer containing a thermal expansion powder that causes volume expansion at a predetermined temperature or higher (Patent Document 1), and an electrode including an undercoat layer containing an organic binder that evaporates or decomposes when heated to a predetermined temperature or higher (Patent Document 2).

### PRIOR ART DOCUMENTS

### PATENT DOCUMENTS

Patent Document 1: JP-A-2003-31208
Patent Document 2: WO 2012/005301 A

### SUMMARY OF THE INVENTION

### PROBLEMS TO BE SOLVED BY THE INVENTION

As described above, various functions for improving safety have been conventionally developed. However, there is no end to the demand for the improvement of the safety, and there is room for improvement in the above-mentioned conventional functions. To improve the safety, it is effective to develop a number of means and use them properly or in combination.

The present invention has been made in view of the above circumstances, and an object of the present invention is to provide an electrode whose safety is improved by means different from the related art, and an energy storage device including the electrode.

### MEANS FOR SOLVING THE PROBLEMS

An aspect of the present invention devised for solving the problem described above is an electrode (A) for an energy storage device including a conductive substrate, an intermediate layer, and an active material layer in this order. In this electrode (A), the intermediate layer includes a conductive agent, a compound decomposed at 100°C or higher to generate a gas, and a binder, and the content of the compound with respect to the content of the conductive agent in the intermediate layer is 2 times or more and 20 times or less by mass ratio.

Another aspect of the present invention devised for solving the problem described above is an electrode (B) for an energy storage device including a conductive substrate, an intermediate layer, and an active material layer in this order. In this electrode (B), the intermediate layer includes a conductive agent, a compound, and a binder, the compound is a carbonate compound, a hydrogen carbonate compound, a hydroxide oxide, a hydrate, or a hydroxide (excluding an alkali metal hydroxide), and the content of the compound with respect to the content of the conductive agent in the intermediate layer is 2 times or more and 20 times or less by mass ratio.

Another aspect of the present invention devised for solving the problem described above is an energy storage device including the electrode (A) or the electrode (B).

### ADVANTAGES OF THE INVENTION

The present invention can provide an electrode whose safety is improved by means different from the related art, and an energy storage device including the electrode.

### BRIEF DESCRIPTION OF THE DRAWINGS

Fig. 1 is an external perspective view showing a nonaqueous electrolyte secondary battery according to one embodiment of the present invention.
Fig. 2 is a schematic diagram showing an energy storage apparatus including a plurality of the nonaqueous electrolyte secondary batteries according to an embodiment of the present invention.
Fig. 3 is a TG-DTA graph of magnesium carbonate n-hydrate and sodium hydrogen carbonate in an experimental example.
Fig. 4 is a TG-DTA graph of anhydrous magnesium carbonate, magnesium hydroxide, and aluminum hydroxide in the experimental example.
Fig. 5 is a graph showing analysis results of Evaluation 1.

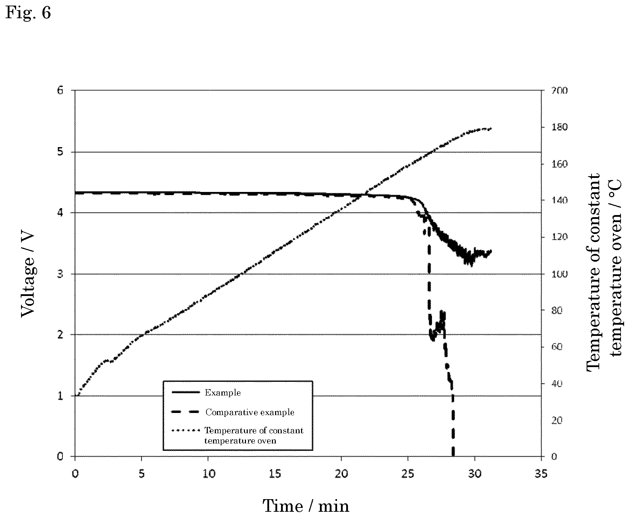

Fig. 6 is a graph showing results of Evaluation 2.

### MODE FOR CARRYING OUT THE INVENTION

One embodiment of the present invention is an electrode (A) for an energy storage device including a conductive substrate, an intermediate layer, and an active material layer in this order. In the electrode (A), the intermediate layer includes a conductive agent, a compound (a) decomposed at 100°C or higher to generate a gas, and a binder, and the content of the compound (a) with respect to the content of the conductive agent in the intermediate layer is 2 times or more and 20 times or less by mass ratio.

The electrode (A) has improved safety. The reason why such an effect occurs in the electrode (A) is not clear, but the following is presumed. In the electrode (A), for example, when the electrode generates heat due to a short circuit, the compound (a) in the intermediate layer is decomposed to generate a gas. The generated gas separates the conductive agents in the intermediate layer and an electron conduction path between the substrate and the active material layer, so that electrical resistance between the substrate and the active material layer increases. In particular, since the content of the compound (a) in the intermediate layer is twice or more by mass ratio with respect to the content of the conductive agent, a sufficient amount of gas for causing the above-described separation is generated, and electrical resistance can be increased. In addition, since the intermediate layer contains a relatively large amount of the compound (a), a sufficient anchor effect of the compound (a) suppresses melt outflow of the binder. Thus, a positive temperature coefficient (PTC) function of the binder is effectively exhibited. As described above, in the electrode (A), a current shutdown function operates in accordance with heat generation due to a short circuit or the like, and further heat generation can be suppressed, so that safety is high.

Whether or not a "gas" is generated is determined in a state under atmospheric pressure at a temperature at which decomposition occurs. For example, if decomposition occurs at 300°C to generate water, the water is a gas. The expression "decomposition occurs at 100°C or higher to generate a gas" means that decomposition occurs at a predetermined temperature range of 100°C or higher to generate a gas, and does not mean only that decomposition occurs when temperature reaches 100°C by heating and gas begins to evolve. In other words, the compound (a) is a compound in which a temperature at which decomposition occurs and gas begins to evolve is substantially a predetermined temperature of 100°C or higher. For example, the compound (a) may generate substantially no gas at lower than 150°C, and may be decomposed to generate a gas when the temperature reaches 150°C. At a temperature lower than 100°C, gas may be generated within a range that does not affect the effects of the present invention.

One embodiment of the present invention is an electrode (B) for an energy storage device including a conductive substrate, an intermediate layer, and an active material layer in this order, in which the intermediate layer includes a conductive agent, a compound (b), and a binder. In the electrode (B), the compound (b) is a carbonate compound, a hydrogen carbonate compound, a hydroxide oxide, a hydrate, or a hydroxide (excluding an alkali metal hydroxide), and the content of the compound (b) with respect to the content of the conductive agent in the intermediate layer is 2 times or more and 20 times or less by mass ratio.

The compound (b) is a compound usually decomposed with heating to generate a gas. Even at a stage where no gas is generated, an anchor effect of the compound (b) suppresses melt outflow of the binder and effectively expresses a PTC function. Therefore, in the electrode (B), the current shutdown function operates in accordance with heat generation due to a short circuit or the like, and further heat generation can be suppressed, so that safety is high. Elimination (dehydration) of water of crystallization from a hydrate is also a type of decomposition.

The content of the compound (a) or the compound (b) (hereinafter, the compound (a) and the compound (b) are also collectively referred to as a "gas generating compound") in the intermediate layer is preferably 30% by mass or more and 90% by mass or less. With the content of the gas generating compound falling within the aforementioned range, it is possible to sufficiently increase resistance during heat generation while securing sufficient conductivity during normal operation.

The content of the conductive agent in the intermediate layer is preferably 2% by mass or more and 15% by mass or less. With the content of the conductive agent falling within the aforementioned range, while sufficient conductivity is secured during normal operation, an electron conduction path between the conductive agents is sufficiently separated during heat generation, and resistance can be increased effectively.

The binder preferably contains a fluororesin. By using a fluororesin sufficiently swollen with heat generation and having an appropriate binding property as a binder, when a gas is generated during heat generation, separation of conductive agents or separation between a substrate and an active material layer is relatively easily achieved, and the shutdown function is effectively exhibited.

The gas generating compound (compound (a) or compound (b)) is preferably a substance decomposed at 800°C or lower to generate a gas. When a thermal decomposition temperature of the gas generating compound is 800°C or lower, if an electrode generates heat, the gas generating compound is rapidly decomposed to generate a gas, so that resistance can be sufficiently increased during heat generation.

The electrodes (A) and (B) are preferably positive electrodes. Generally, conductivity of a positive electrode active material layer is lower than conductivity of a negative electrode active material layer. As for the substrate, generally, a positive electrode substrate has lower conductivity than a negative electrode substrate. Thus, by applying the electrode to a positive electrode generally having relatively low conductivity, the shutdown function of lowering conductivity during heat generation is more effectively exhibited. When the electrode is a positive electrode, the conductivity of an intermediate layer during normal operation can be designed to be higher than the conductivity of the positive electrode active material layer, and a reduction in conductivity during normal operation by provision of the intermediate layer hardly occurs. Thus, it is possible to sufficiently increase resistance during heat generation while securing sufficient conductivity during normal operation.

One embodiment of the present invention is an energy storage device including the electrode (A) or the electrode (B). Since the energy storage device includes the electrode (A) or the electrode (B), safety is improved.

Hereinafter, a positive electrode as one embodiment of the electrode of the present invention, and a nonaqueous electrolyte secondary battery (hereinafter, may be simply referred to as "secondary battery") as one embodiment of the energy storage device of the present invention will be described in detail.

### <Positive Electrode (Electrode)>

The positive electrode according to one embodiment of the present invention includes a positive electrode substrate, an intermediate layer, and a positive electrode active material layer in this order. The positive electrode substrate is an example of a substrate, and the positive electrode active material layer is an example of an active material layer. The positive electrode is a layered structure in which the positive electrode substrate, the intermediate layer, and the positive electrode active material layer are stacked in this order. The intermediate layer and the positive electrode active material layer may be stacked only on one side of the positive electrode substrate, or may be stacked on both sides. The positive electrode is used as a positive electrode of an energy storage device.

### (Positive electrode substrate)

The positive electrode substrate is a substrate having conductivity. As the material of the positive electrode substrate, a metal such as aluminum, titanium, tantalum, or stainless steel, or an alloy thereof is used. Among these materials, aluminum and an aluminum alloy are preferred for the balance among the potential resistance, conductivity level, and cost. Exemplified as a form of the positive electrode substrate are a foil and a deposited film, and a foil is preferred in terms of costs. An aluminum foil is preferred as the positive electrode substrate. Examples of aluminum and the aluminum alloy include A1085P and A3003P specified in JIS-H-4000 (2014).

### (Intermediate layer)

The intermediate layer covers at least a portion of the surface of the positive electrode substrate. The intermediate layer includes a conductive agent, a gas generating compound, and a binder. Generally, the intermediate layer is a layer having a function of reducing contact resistance between the positive electrode substrate and the positive electrode active material layer. The intermediate layer included in the electrode of one embodiment of the present invention has a function of interrupting current during heat generation, in addition to the above function.

The conductive agent contained in the intermediate layer is not particularly limited as long as it has conductivity. Examples of the conducting agent include carbon blacks such as furnace black, acetylene black, and ketjen black, natural or artificial graphite, metal, and conductive ceramic. Among these conductive agents, carbon black is preferred. The shape of the conductive agent is usually particulate. Having "conductivity" means having a volume resistivity of 10⁷ Ω cm or less that is measured in accordance with JIS-H-0505 (1975).

A primary particle size of the conductive agent is preferably, for example, 20 nm or more and 1 pm or less. By using the conductive agent having such a particle size, an electron conduction path between the conductive agents is likely to be separated due to gas generation, and a shutdown function can be further enhanced. The particle size means a value (D50) at which a volume-based cumulative distribution calculated in accordance with JIS-Z-8819-2 (2001) is 50%.

The lower limit of the content of the conductive agent in the intermediate layer may be, for example, 1% by mass, preferably 2% by mass, and more preferably 3% by mass. When the content of the conductive agent in the intermediate layer is equal to or more than the lower limit, sufficient conductivity can be exhibited during normal use. The upper limit of the content of the conductive agent in the intermediate layer may be, for example, 20% by mass, preferably 15% by mass, and more preferably 13% by mass. When the content of the conductive agent in the intermediate layer is equal to or less than the upper limit, the electron conduction path between the conductive agents is effectively separated with generation of gas, and a more excellent shutdown function can be exhibited.

One embodiment of the gas generating compound is a compound (a) decomposed at 100°C or higher to generate a gas. Specific examples of the compound (a) include a carbonate compound, a hydrogen carbonate compound, a hydroxide oxide, a hydrate, or a hydroxide, and other organic compounds. A carbonate compound, a hydrogen carbonate compound, a hydroxide oxide, a hydrate, and a hydroxide are preferred, a carbonate compound, a hydrogen carbonate compound and a hydroxide are more preferred, a carbonate compound and a hydroxide are still more preferred, and a hydroxide is even more preferred.

Other examples of the gas generating compound include a carbonate compound, a hydrogen carbonate compound, a hydroxide oxide, a hydrate, and a hydroxide (excluding an alkali metal hydroxide). These compounds (b) are usually decomposed with heating to generate a gas. The compound (b) is decomposed at, for example, 100°C or higher. Among the compounds (b), a carbonate compound, a hydrogen carbonate compound and a hydroxide are preferred, a carbonate compound and a hydroxide are more preferred, and a hydroxide is still more preferred.

The gas generating compound can be used alone or in combination of two or more.

Examples of the carbonate compound include carbonates of alkaline earth metals such as magnesium carbonate and calcium carbonate, and other examples include aluminum carbonate. Among these carbonate compounds, carbonates of alkaline earth metals are preferred, and magnesium carbonate is more preferred. Magnesium carbonate and the like may be anhydrous or hydrated.

Examples of the hydrogen carbonate compound include alkali metal hydrogen carbonate such as sodium hydrogen carbonate and potassium hydrogen carbonate, and alkaline earth metal hydrogen carbonate such as calcium hydrogen carbonate. Among these hydrogen carbonate compounds, alkali metal hydrogen carbonate is preferred, and sodium hydrogen carbonate is more preferred.

Examples of the hydroxide oxide include aluminum hydroxide oxide (such as boehmite) and magnesium hydroxide oxide.

Examples of the hydrate include calcium sulfate dihydrate, copper sulfate pentahydrate, and magnesium carbonate n-hydrate.

Examples of the hydroxide include hydroxides of alkaline earth metals such as magnesium hydroxide and calcium hydroxide, and hydroxides of Group 13 elements such as aluminum hydroxide.

The lower limit of the temperature at which the gas generating compound is decomposed is preferably 130°C, more preferably 160°C, and may be further more preferably 200°C. This can reduce the risk of the gas generating compound being decomposed in a drying step after production of the electrode. The upper limit of the temperature at which the gas generating substance is decomposed is not particularly limited as long as it is equal to or lower than a maximum attainable temperature inside the battery at the time of an abnormality such as a short circuit, and the upper limit temperature is preferably 800°C or lower, more preferably 600°C or lower, and still more preferably 450°C or lower. The temperature at which the gas generating compound is decomposed is preferably lower than a temperature at which a positive electrode active material thermally runs away. The gas generating compound is decomposed to generate a gas before the positive electrode active material thermally runs away, so that separation of the electron conduction path between the conductive agents or separation of an electron conduction path between the positive electrode substrate and the positive electrode active material layer progresses, and a sufficient shutdown function can be exhibited. The shape of the gas generating compound is usually particulate in the intermediate layer during normal use. The gas generating compound is typically insulating.

When the gas generating compound is heated from room temperature (20°C) to 300°C or 500°C, a lower limit of a mass loss rate is preferably 3% by mass, more preferably 5% by mass, and may be still more preferably 10% by mass, 20% by mass or 30% by mass. The upper limit of the mass loss rate is preferably 70% by mass, and may be more preferably 50% by mass, 30% by mass or 20% by mass. When the mass loss rate, that is, the amount of generated gas is within the above range, safety during heat generation can be further improved.

The gas from which the gas generating compound is generated is preferably flame-retardant and non-combustible. By generating a flame-retardant and non-combustible gas, a possibility of ignition due to heat generation can be reduced, and safety is further improved. Examples of the flame-retardant and non-combustible gas include carbon dioxide, water (steam), and nitrogen, and among these gases, carbon dioxide is preferred.

The gas generating compound may be a compound that generates a solid insulating inorganic substance such as an oxide when decomposed. In such a case, the solid insulating inorganic substance itself exists between the substrate and the active material layer, and can contribute to securing an insulating property.

A D50 particle size of the gas generating compound is preferably, for example, 0.1 pm or more and 10 pm or less. ABET specific surface area of the gas generating compound is preferably, for example, 1 m²/g or more and 10 m²/g or less. By using a gas generating compound having such a particle size or a specific surface area, gas can be generated more effectively during heat generation, and resistance can be effectively increased.

The "D50 particle size" means a value at which the volume-based cumulative distribution calculated in accordance with JIS-Z-8819-2 (2001) is 50%. The D50 particle size can be specifically measured by the following method. The D50 particle size is measured using a laser diffraction particle size distribution measurement device ("SALD-2200" manufactured by Shimadzu Corporation) as a measurement device and WingSALD-2200 as measurement control software. A scattering measurement mode is employed, and laser light is applied to a wet cell in which a dispersion liquid in which particles of a sample to be measured are dispersed in a dispersion solvent circulates, to obtain a scattered light distribution from a measurement sample. Then, the scattered light distribution is approximated by logarithmic normal distribution, and a particle size corresponding to a cumulative degree of 50% is defined as the D50 particle size. It is confirmed that, from a SEM image, the D50 particle size based on the above measurement can be substituted for an average particle size measured by extracting 50 particles while avoiding extremely large particles and extremely small particles.

The "BET specific surface area" is a value measured by the following method. First, pore size distribution is measured using a nitrogen adsorption method. This measurement can be performed by "autosorb iQ" manufactured by Quantachrome Instruments. Five points are extracted from a region of P/P0 = 0.06 to 0.3 of an adsorption isotherm to be obtained, BET plotting is carried out, and the BET specific surface area is calculated from a y-intercept and slope of the straight line.

The shape of the gas generating compound is not particularly limited, but is preferably a rod shape. When the gas generating compound is rod-shaped, an anchor effect is enhanced, and melt outflow of the binder exhibiting a PTC function can be sufficiently suppressed. When the gas generating compound is rod-shaped, decomposition with heating is likely to occur. The "rod shape" refers to particles having a ratio of major axis to minor axis of 2 or more, and particles having the ratio of 5 or more are preferred. The upper limit for this ratio may be, for example, 100. The minor axis and major axis are average values of high-order five particles, which have a large major axis, in one field of view observed with an electron microscope. The lower limit of the minor axis of the rod-shaped gas generating compound is preferably 0.01 pm, and preferably 0.1 pm. The upper limit of the minor axis is preferably 10 pm, and more preferably 4 pm.

The lower limit of the content of the gas generating compound with respect to the content of the conductive agent in the intermediate layer is twice by mass ratio, preferably four times, and more preferably six times. When the content of the gas generating compound with respect to the conductive agent is equal to or more than the lower limit, a gas is generated such that separation of the electron conduction path between the conductive agents or separation of an electron conduction path between the positive electrode substrate and the positive electrode active material layer sufficiently occurs, and a sufficient shutdown function is exhibited The upper limit of the content of the gas generating compound with respect to the content of the conductive agent in the intermediate layer is 20 times by mass ratio, preferably 16 times, and more preferably 12 times. When the content of the gas generating compound with respect to the conductive agent is equal to or less than the upper limit, a sufficient amount of the conductive agent can be present in the intermediate layer, and good conductivity during normal operation can be secured.

The lower limit of the content of the gas generating compound in the intermediate layer may be, for example, 10% by mass, preferably 30% by mass, more preferably 50% by mass, and still more preferably 60% by mass. When the content of the gas generating compound in the intermediate layer is equal to or more than the lower limit, the electron conduction path between the conductive agents or the electron conduction path between the positive electrode substrate and the positive electrode active material layer is effectively separated with generation of gas, and a more excellent shutdown function can be exhibited. When the content of the gas generating compound in the intermediate layer is equal to or more than the lower limit, the anchor effect is enhanced, and melt outflow of the binder exhibiting the PTC function can be sufficiently suppressed. The upper limit of the content of the gas generating compound in the intermediate layer may be, for example, 95% by mass, preferably 90% by mass, and more preferably 85% by mass. When the content of the gas generating compound in the intermediate layer is equal to or less than the upper limit, good conductivity during normal use and a good shutdown function during heat generation can be exhibited in a well-balanced manner.

Examples of the binder (binding agent) include thermoplastic resins such as fluororesins (polytetrafluoroethylene (PTFE), polyvinylidene fluoride (PVDF) and the like), polyethylene, polypropylene and polyimide; elastomers such as ethylene-propylene-diene rubber (EPDM), sulfonated EPDM, styrene butadiene rubber (SBR) and fluorine rubber; and polysaccharide polymers. Among these binders, from the viewpoint of exhibiting a good PTC function, a resin that swells with heating is preferred, specifically, a fluororesin is preferred, and PVDF is more preferred.

The lower limit of the content of the binder in the intermediate layer is preferably 5% by mass, and more preferably 10% by mass. The upper limit of the content is preferably 30% by mass, and more preferably 20% by mass. With the content of the binder in the intermediate layer falling within the aforementioned range, a sufficient binding property and separability of the electron conduction path between the conductive agents or layers at the time of gas generation during heat generation can be exhibited in a well-balanced manner.

The intermediate layer may further contain components other than the conductive agent, the gas generating compound, and the binder. The upper limit of the content of the other components in the intermediate layer is preferably, for example, 20% by mass. The upper limit may be 10% by mass, 5% by mass, or 1% by mass. When the content of other compounds is equal to or less than the upper limit, both good conductivity during normal use and the shutdown function at the time of an abnormality can be more favorably achieved.

An average thickness of the intermediate layer is not particularly limited, but the lower limit is preferably 0.5 pm, more preferably 1 pm, and still more preferably 2 pm. The upper limit of the average thickness is preferably 10 pm, and more preferably 6 pm. When the average thickness of the intermediate layer is equal to or more than the lower limit, the shutdown function can be further enhanced. When the average thickness of the intermediate layer is equal to or less than the upper limit, the thickness of the positive electrode can be reduced. The average thickness of the intermediate layer refers to a value obtained by measuring and averaging the thickness of the intermediate layer at five or more points in a cross-sectional scanning electron microscope (SEM) of an electrode including a conductive substrate, the intermediate layer, and an active material layer. The cross-sectional SEM is a method of preparing a cut surface of a sample and observing the cross section with a scanning electron microscope.

### (Positive active material layer)

The positive electrode active material layer is formed from a so-called positive composite containing a positive active material. The positive composite that forms the positive electrode active material layer contains optional components such as a conductive agent, a binder, a thickener and a filler as necessary.

Examples of the positive electrode active material include composite oxides represented by LiₓMO_{y} (M represents at least one transition metal) (LiₓCoO₂, LiₓNiO₂, LiₓMnO₃, LiₓNi_{α}Co_{(1-α)}O₂, LiₓNi_{α}Mn_{β}Co_{(1-α-β)}O₂ and the like each having a layered α-NaFeO₂-type crystal structure, and LiₓMn₂O₄, LiₓNi_{α}Mn_{(2-α)}O₄ and the like each having a spinel-type crystal structure), and polyanion compounds represented by Li_{w}Meₓ(XO_{y})_{z} (Me represents at least one transition metal, and X represents, for example, P, Si, B, V or the like) (LiFePO₄, LiMnPO₄, LiNiPO₄, LiCoPO₄, Li₃V₂(PO₄)₃, Li₂MnSiO₄, Li₂CoPO₄F and the like). Elements or polyanions in these compounds may be partially substituted with other elements or anionic species. In the positive electrode active material layer, one of these compounds may be used singly, or two or more of these compounds may be mixed and used.

The conductive agent and the binder contained in the positive electrode active material layer may be the same as those in the intermediate layer.

Examples of the thickener include polysaccharide polymers such as carboxymethylcellulose (CMC) and methylcellulose. When the thickener has a functional group reactive with lithium, it is preferable to deactivate the functional group by methylation or the like in advance.

The filler is not particularly limited. Examples of the main component of the filler include polyolefins such as polypropylene and polyethylene, silica, alumina, zeolite and glass.

### (Production method)

A method of producing the positive electrode is not particularly limited. For example, the positive electrode can be obtained by sequentially applying a paste for forming an intermediate layer and a paste for forming a positive electrode active material layer onto a positive electrode substrate and drying the pastes.

### <Secondary Battery (Nonaqueous Electrolyte Energy Storage Device)>

The secondary battery according to one embodiment of the present invention has a positive electrode, a negative electrode, and a nonaqueous electrolyte. The positive electrode and the negative electrode usually form an electrode body stacked or wound with a separator interposed therebetween. The electrode assembly is housed in a case, and the case is filled with the nonaqueous electrolyte. The nonaqueous electrolyte is interposed between the positive electrode and the negative electrode. As the case, a known metal case, a resin case or the like, which is usually used as a case of a secondary battery, can be used.

### (Positive electrode)

The positive electrode provided in the secondary battery has a positive electrode substrate and a positive electrode active material layer disposed directly or via an intermediate layer on the positive electrode substrate. The positive electrode is preferably the positive electrode according to one embodiment of the present invention described above.

### (Negative electrode)

The negative electrode has a negative electrode substrate and a negative electrode active material layer disposed directly or via an intermediate layer on the negative electrode substrate. When the positive electrode is not the positive electrode according to one embodiment of the present invention described above, the electrode is the negative electrode according to one embodiment of the present invention including the negative electrode substrate, the intermediate layer, and the negative electrode active material layer in this order.

The negative electrode substrate may have the same configuration as that of the positive electrode substrate. As the material of the negative electrode substrate, metals such as copper, nickel, stainless steel, and nickel-plated steel or alloys thereof are used, and copper or a copper alloy is preferred. A copper foil is preferred as the negative electrode substrate. Examples of the copper foil include rolled copper foils and electrolytic copper foils.

The configuration of the intermediate layer in the negative electrode is not particularly limited, and can be formed from, for example, a composition containing a binder and a conductive agent. The intermediate layer of the negative electrode may be formed with the same composition as the above-described intermediate layer of the positive electrode.

The negative electrode active material layer is formed from a so-called negative composite containing a negative active material. The negative composite that forms the negative electrode active material layer contains optional components such as a conductive agent, a binder, a thickener and a filler as necessary. As regards the optional component such as a conducting agent, a binding agent, a thickener, or a filler, it is possible to use the same component as in the positive electrode active material layer.

As the negative active material, a material capable of absorbing and releasing lithium ions is normally used. Specific examples of the negative electrode active material include metals or metalloids such as Si and Sn; metal oxides or metalloid oxides such as a Si oxide and a Sn oxide; a polyphosphoric acid compound; and carbon materials such as graphite and non-graphitic carbon (easily graphitizable carbon or hardly graphitizable carbon).

The negative composite (negative electrode active material layer) may also contain a typical nonmetal element such as B, N, P, F, Cl, Br, or I, a typical metal element such as Li, Na, Mg, Al, K, Ca, Zn, Ga, or Ge, or a transition metal element such as Sc, Ti, V, Cr, Mn, Fe, Co, Ni, Cu, Mo, Zr, Ta, Hf, Nb, or W.

### (Separator)

As a material of the separator, for example, a woven fabric, a nonwoven fabric, a porous resin film or the like is used. Among them, a porous resin film is preferred. As a main component of the porous resin film, for example, a polyolefin such as polyethylene or polypropylene is preferred from the viewpoint of strength. A porous resin film in which these resins are combined with a resin such as aramid or polyimide may be used.

### (Nonaqueous electrolyte)

As the nonaqueous electrolyte, a known electrolyte generally used for nonaqueous electrolyte secondary batteries can be used, and a nonaqueous solvent in which an electrolyte salt is dissolved can be used.

Examples of the nonaqueous solvents include cyclic carbonates such as ethylene carbonate (EC), propylene carbonate (PC), and butylene carbonate (BC), and open-chain carbonates such as diethyl carbonate (DEC), dimethyl carbonate (DMC), and ethyl methyl carbonate (EMC).

Examples of the electrolyte salt include lithium salts, sodium salts, potassium salts, magnesium salts and onium salts, with lithium salts being preferable. Examples of the lithium salt include inorganic lithium salts such as LiPF₆, LiPO₂F₂, LiBF₄, LiClO₄, and LiN(SO₂F)₂, and lithium salts having a fluorinated hydrocarbon group, such as LiSO₃CF₃, LiN(SO₂CF₃)₂, LiN(SO₂C₂F₅)₂, LiN(SO₂CF₃)(SO₂C₄F₉), LiC(SO₂CF₃)₃ and LiC(SO₂C₂F₅)₃.

As the nonaqueous electrolyte, a salt that is melted at normal temperature (ionic liquid), a polymer solid electrolyte, or the like can also be used.

### (Production method)

A method of producing the secondary battery is not particularly limited. The method of producing the secondary battery includes, for example, a step of preparing a positive electrode, a step of preparing a negative electrode, a step of preparing a nonaqueous electrolyte, a step of forming an electrode assembly in which the positive electrode and the negative electrode are alternately superposed by stacking or winding the positive electrode and the negative electrode with a separator interposed between the electrodes, a step of housing the positive electrode and the negative electrode (electrode assembly) in a battery case, and a step of injecting the nonaqueous electrolyte into the battery case. A nonaqueous electrolyte secondary battery (nonaqueous electrolyte energy storage device) can be obtained by sealing an injection port after the injection. The details of each element constituting the nonaqueous electrolyte energy storage device (secondary battery) obtained by the production method are as described above.

### <Other Embodiments>

The present invention is not limited to the aforementioned embodiments, and, in addition to the aforementioned embodiments, can be carried out in various modes with alterations and/or improvements being made. For example, in the above embodiment, although the intermediate layer of the positive electrode contains the gas generating compound, the intermediate layer of the positive electrode may not contain the gas generating compound, and the intermediate layer of the negative electrode may contain the gas generating compound. Each of the intermediate layer of the positive electrode and the intermediate layer of the negative electrode may contain the gas generating compound. When the intermediate layer of the positive electrode contains the gas generating compound, the negative electrode may not have the intermediate layer. Conversely, when the intermediate layer of the negative electrode contains the gas generating compound, the positive electrode may not have the intermediate layer. In the positive electrode or the negative electrode, a covering layer or the like that covers the active material layer may be provided.

In the above embodiment, the embodiment in which the energy storage device is a nonaqueous electrolyte secondary battery has been described, but another energy storage device may be used. Examples of another energy storage device include capacitors (electric double layer capacitors and lithium ion capacitors) and secondary batteries in which an electrolyte contains water.

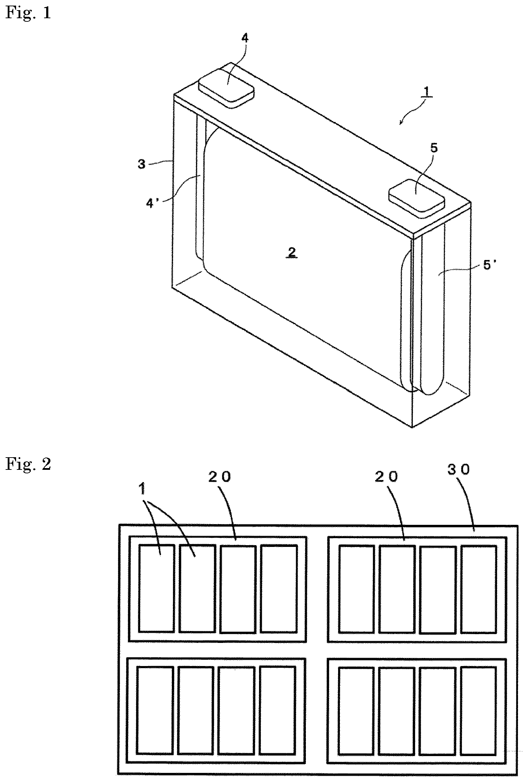

Fig. 1 is a schematic view of a rectangular nonaqueous electrolyte secondary battery 1 (secondary battery 1) as one embodiment of the energy storage device according to the present invention. Fig. 1 is a view showing the inside of a case in a perspective manner. In the secondary battery 1 shown in Fig. 1, an electrode assembly 2 is housed in a battery case 3. The electrode assembly 2 is formed by winding a positive electrode, including a positive electrode active material, and a negative electrode, including a negative electrode active material, with a separator interposed between the electrodes. The positive electrode is electrically connected to a positive electrode terminal 4 through a positive electrode lead 4', and the negative electrode is electrically connected to a negative electrode terminal 5 through a negative electrode lead 5'. A nonaqueous electrolyte is injected in the battery case 3. The specific configuration of each element such as the positive electrode is as described above.

The configuration of the energy storage device according to the present invention is not particularly limited, and examples include cylindrical batteries, prismatic batteries (rectangular batteries) and flat batteries. The present invention can also be implemented as an energy storage apparatus including a plurality of the nonaqueous electrolyte energy storage devices as described above. Fig. 2 shows one embodiment of an energy storage apparatus. In Fig. 2, an energy storage apparatus 30 includes a plurality of energy storage units 20. Each of the energy storage units 20 includes a plurality of the secondary batteries 1. The energy storage apparatus 30 can be mounted as a power source for an automobile such as an electric vehicle (EV), a hybrid vehicle (HEV), a plug-in hybrid vehicle (PHEV), or the like.

### EXAMPLES

Hereinafter, the present invention will be described further in detail by way of examples, but the present invention is not limited to the following examples.

### [Experimental Example]

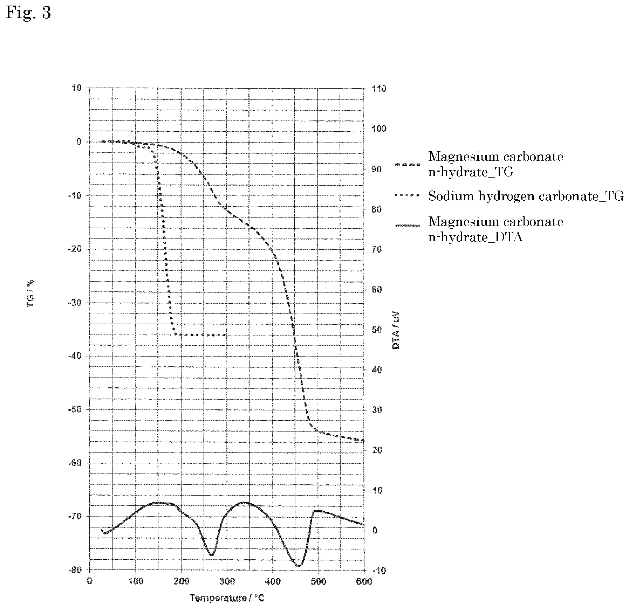

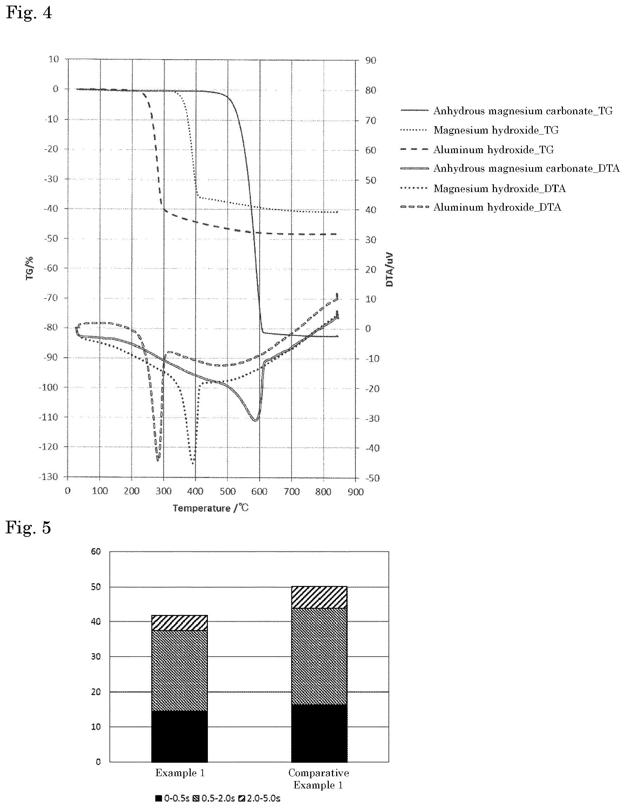

Magnesium carbonate n-hydrate ("GP30N" from Konoshima Co., Ltd., rod-shaped particles with a diameter of 500 nm and a length of 7.5 to 24 pm, BET specific surface area 22.4 m²/g), anhydrous magnesium carbonate ("synthesized magnesite MSS" from Konoshima Co., Ltd., D50 particle size 1.2 µm, BET specific surface area 5.63 m²/g), magnesium hydroxide ("MAGUSHIZU X-6" from Konoshima Co., Ltd., D50 particle size 0.9 pm, BET specific surface area 6.73 m²/g), aluminum hydroxide ("C-301N" from Sumitomo Chemical Co., Ltd., D50 particle size 1.5 pm, BET specific surface area 4 m²/g) and sodium hydrogen carbonate were subjected to TG-DTA analysis. Magnesium carbonate n-hydrate is a hydrate of basic magnesium carbonate and contains magnesium carbonate and magnesium hydroxide. Fig. 3 is a TG-DTA graph of magnesium carbonate n-hydrate and sodium hydrogen carbonate obtained. In Fig. 3, only the TG graph is shown for sodium hydrogen carbonate. Fig. 4 is a TG-DTA graph of anhydrous magnesium carbonate, magnesium hydroxide, and aluminum hydroxide obtained.

As shown in Fig. 3, it can be seen that the mass of magnesium carbonate n-hydrate decreases around 250°C and around 450°C, and that the mass of sodium hydrogen carbonate decreases around 150°C. Since magnesium carbonate n-hydrate contains water of crystallization, magnesium carbonate and magnesium hydroxide, the mass loss of magnesium carbonate n-hydrate around 250°C is presumed to be due to elimination of water of crystallization, and the mass loss around 450°C is presumed to be due to a thermal decomposition reaction of magnesium carbonate and magnesium hydroxide. It can be said that thermal decomposition occurs in these temperature regions, and water and carbon dioxide are generated. Although not sufficiently read in the graph of Fig. 3, according to the results of the above experimental example, in magnesium carbonate n-hydrate, the mass loss of about 0.3% by mass at 120°C and about 0.8% by mass at 160°C occurred. It is presumed that the above-mentioned elimination of water of crystallization has started when the temperature exceeds 100°C. It can be said that carbon dioxide is generated around 150°C also for sodium hydrogen carbonate. It has been confirmed that these compounds are compounds decomposed at 100°C or higher to generate a gas.

As shown in Fig. 4, it can be seen that the mass of anhydrous magnesium carbonate is greatly reduced at around 500°C to 600°C, the mass of magnesium hydroxide is greatly reduced at around 300°C to 400°C, and the mass of aluminum hydroxide is greatly reduced at around 200°C to 300°C. It is presumed that carbon dioxide is generated from anhydrous magnesium carbonate by a thermal decomposition reaction, and water (steam) is generated from magnesium hydroxide and aluminum hydroxide by the thermal decomposition reaction. It has been confirmed that these compounds are also compounds decomposed at 100°C or higher to generate a gas.

### [Example 1]

### (Production of positive electrode)

An intermediate layer was formed on the surface of an aluminum foil (average thickness 15 pm) as a positive electrode substrate in the following manner. Acetylene black (AB), the magnesium carbonate n-hydrate described above, and polyvinylidene fluoride (PVDF) were weighed at a mass ratio of 8 : 77 : 15. These materials were mixed with N-methyl-2-pyrrolidone (NMP) as a dispersion medium to prepare a paste for forming an intermediate layer. The paste for forming an intermediate layer was applied to an aluminum foil. Thereafter, drying was performed to obtain an intermediate layer having an average thickness of 8 µm.

Li(Ni_{0.82}Co₀.₁₅Al_{0.03})O₂ as a positive electrode active material, AB and PVDF were contained in a mass ratio of 95 : 3 : 2 (in terms of solid content), and a paste for forming a positive electrode active material in which N-methyl-2-pyrrolidone was used as a dispersion medium was prepared. The paste for forming a positive electrode active material was applied to the surface of the intermediate layer and was subjected to pressure molding using a roller press. Thereafter, the dispersion medium was removed by drying to obtain a positive electrode of Example 1. The average thickness of the intermediate layer after the pressure molding was 4 pm. The positive electrode was provided with a tab on which the intermediate layer and the positive electrode active material layer were not stacked.

### [Comparative Example 1]

A positive electrode of Comparative Example 1 was obtained in the same manner as in Example 1, except that the intermediate layer was not provided.

### [Comparative Example 2]

A positive electrode of Comparative Example 2 was obtained in the same manner as in Example 1, except that as materials for the intermediate layer, AB, aluminum oxide particles, and PVDF were used in a mass ratio of 8 : 77 : 15, and an intermediate layer having an average thickness of 2.5 µm was obtained.

### [Evaluation 1]

### (Nail penetration test)

An electrode assembly was produced by sandwiching a polyolefin porous resin film separator between the positive electrode of Example 1 or Comparative Example 1 and a negative electrode whose negative electrode active material was graphite. The electrode assembly was housed in a metal-resin composite film as an outer case so that a tab of each electrode was exposed, and sealed. Thus, a dry cell was obtained. A nail penetration test was performed on the dry cell by applying a voltage of 4.35 V between the positive electrode and the negative electrode and allowing a nail to penetrate in an electrode stacking direction. An amount of heat generated in each range of 0 to 0.5 seconds, 0.5 to 2.0 seconds, and 2.0 to 5.0 seconds was analyzed based on a value of a change in a resistance value Rdz to 5 seconds after the nail was penetrated and a short circuit occurred. It is presumed that the heat that starts to be generated in 0 to 0.5 seconds is caused by the short circuit in the nail penetration, the heat that starts to be generated in 0.5 to 2.0 seconds is caused by a melting phenomenon of the separator, and the heat that starts to be generated in 2.0 to 5.0 seconds is caused by large-current discharge. Fig. 4 shows the analysis results.

As shown in Fig. 4, it can be seen that in a dry cell using the positive electrode of Example 1, heat generation after nail penetration is suppressed. In particular, in Example 1, heat generation in the initial stage (after 0 to 0.5 seconds) was reduced, and an increase in resistance value due to generation of gas from the intermediate layer of the positive electrode is presumed to have contributed to suppression of heat generation.

### [Evaluation 2]

### (Cell heating test)

An electrode assembly was produced by sandwiching a polyolefin porous resin film separator between the positive electrode of Example 1 or Comparative Example 1 and a negative electrode whose negative electrode active material was graphite. The electrode assembly was housed in a metal-resin composite film as an outer case so that a tab of each electrode was exposed, an electrolyte was injected, and the electrode assembly was then sealed. Thus, a nonaqueous electrolyte secondary battery was obtained.

With respect to each of the obtained nonaqueous electrolyte secondary batteries, a charge termination condition was set until a charge current reached 1/100 C, and the battery was charged at a charge termination voltage of 4.35 V. Thereafter, with the nonaqueous electrolyte secondary battery fixed, the battery was heated by a heater, and a change in voltage was measured. The heating rate was 5°C/min. With the heating, a short circuit occurred, and the voltage decreased. Fig. 5 shows a change with time of the voltage.

As shown in Fig. 5, it can be seen that Example 1 maintains a higher voltage than that in Comparative Example 1. This is considered as follows. First, when a short circuit occurs due to contraction of the separator, heat is generated inside the nonaqueous electrolyte secondary battery. The heat generation decomposes magnesium carbonate n-hydrate contained in the intermediate layer to generate a gas. As a result, electrical resistance between the positive electrode substrate and the positive electrode active material layer increases, and a good shutdown function is exhibited. That is, it can be seen that the nonaqueous electrolyte secondary battery of Example 1 has higher safety than the nonaqueous electrolyte secondary battery of Comparative Example 1.

### INDUSTRIAL APPLICABILITY

The present invention can be applied to nonaqueous electrolyte secondary batteries to be used as power sources for electronic devices such as personal computers and communication terminals, automobiles and the like.

### DESCRIPTION OF REFERENCE SIGNS

- 1: Nonaqueous electrolyte secondary battery
- 2: Electrode assembly
- 3: Battery case
- 4: Positive electrode terminal
- 4': Positive electrode lead
- 5: Negative electrode terminal
- 5': Negative electrode lead
- 20: Energy storage unit
- 30: Energy storage apparatus

## Claims

1. An electrode for an energy storage device comprising a conductive substrate, an intermediate layer, and an active material layer in this order,
wherein the intermediate layer includes a conductive agent, a compound decomposed at 100°C or higher to generate a gas, and a binder, and
a content of the compound with respect to a content of the conductive agent in the intermediate layer is 2 times or more and 20 times or less by mass ratio.

2. An electrode for an energy storage device comprising a conductive substrate, an intermediate layer, and an active material layer in this order,
wherein the intermediate layer includes a conductive agent, a compound, and a binder, and
the compound is a carbonate compound, a hydrogen carbonate compound, a hydroxide oxide, a hydrate, or a hydroxide (excluding an alkali metal hydroxide), and
a content of the compound with respect to a content of the conductive agent in the intermediate layer is 2 times or more and 20 times or less by mass ratio.

3. The electrode according to claim 1 or 2, wherein a content of the compound in the intermediate layer is 30% by mass or more and 90% by mass or less.

4. The electrode according to claim 1, 2 or 3, wherein a content of the conductive agent in the intermediate layer is 2% by mass or more and 15% by mass or less.

5. The electrode according to any one of claims 1 to 4, wherein the binder contains a fluororesin.

6. The electrode according to any one of claims 1 to 5, wherein the compound is a substance decomposed at 800°C or lower to generate a gas.

7. The electrode according to any one of claims 1 to 6, which is a positive electrode.

8. An energy storage device comprising the electrode according to any one of claims 1 to 7.
